Europäisches Patentamt

European Patent Office

Office européen des brevets

(19)

(11) **EP 1 155 531 B1**

(12) **FASCICULE DE BREVET EUROPEEN**

(45) Date de publication et mention
de la délivrance du brevet:
**01.06.2005 Bulletin 2005/22**

(21) Numéro de dépôt: **00903766.4**

(22) Date de dépôt: **09.02.2000**

(51) Int Cl.⁷: **H04L 12/26**

(86) Numéro de dépôt international:
**PCT/FR2000/000311**

(87) Numéro de publication internationale:
**WO 2000/051292 (31.08.2000 Gazette 2000/35)**

(54) **SYSTEME ET PROCEDE DE MESURE DES DUREES DE TRANSFERT ET DES TAUX DE PERTES DANS DES RESEAUX DE TELECOMMUNICATION HAUT-DEBIT**

SYSTEM UND VERFAHREN ZUR MESSUNG DER ÜBERTRAGUNGSDAUER UND DER VERLUSTE IN EINEM HOCHLEISTUNGS-TELEKOMMUNIKATIONSNETZ

SYSTEM AND METHOD FOR MEASURING THE TRANSFER DURATIONS AND LOSS RATES IN HIGH VOLUME TELECOMMUNICATION NETWORKS

(84) Etats contractants désignés:
**AT BE CH CY DE DK ES FI FR GB GR IE IT LI LU MC NL PT SE**

(30) Priorité: **26.02.1999 FR 9902399**
**12.05.1999 FR 9906115**

(43) Date de publication de la demande:
**21.11.2001 Bulletin 2001/47**

(73) Titulaire: **Ipanema Technologies S.A.**
**92130 Issy-Les-Moulineaux (FR)**

(72) Inventeur: **Grenot, Thierry**
**92140 Clamart (FR)**

(74) Mandataire: **de Roquemaurel, Bruno**
**Novagraaf Technologies**
**122, rue Edouard Vaillant**
**92593 Levallois Perret Cedex (FR)**

(56) Documents cités:
**US-A- 5 521 907        US-A- 5 535 193**

**Description**

La présente invention concerne un procédé non-intrusif de mesure des taux de perte et des durées de transfert de données dans un réseau de télécommunication en mode paquet.

L'invention est particulièrement adaptée à des réseaux à haut débit fonctionnant en mode non connecté. Elle concerne également un système à architecture répartie comportant une pluralité de sondes d'observation de flux disposées en différents points du réseau et des moyens de transmission de ces mesures vers un module collecteur relié à des moyens de stockage et à des moyens d'analyse des mesures réalisées.

Les réseaux de télécommunication en mode paquet se caractérisent par le fait que les informations transmises sont véhiculées en groupes appelés paquets, essentiellement constitués d'un en-tête contenant les informations pour l'acheminement du paquet dans le réseau et des données à transmettre. Ces paquets sont véhiculés à travers le réseau, et empruntent au gré de ce réseau des moyens de transmission et de commutation les plus variés.

Un exemple de réseau en mode paquet est le réseau Internet, fonctionnant avec le protocole IP (Internet Procotol). Quelques exemples de moyens de transmission et de commutation associés au protocole IP sont des réseaux RNIS (Réseau Numérique à Intégration de service), FR (Frame Relay), ATM (Asynchronous Transfer Mode), SDH (Synchronous Digital Hierarchy), SONET (Synchronous Optical Network), DWDM (Dense Wevelength Digital Multiplexing), etc.

Les paquets sont typiquement émis par un grand nombre de sources fonctionnant indépendamment les unes des autres, vers un grand nombre de destinations fonctionnant également indépendamment les unes des autres.

Du fait que les instants d'émission des paquets et la longueur de chaque paquet ne sont pas déterminés finement par le réseau lui-même, il est difficile pour l'exploitant et les utilisateurs du réseau de garantir, voire même d'estimer la durée du transfert et le taux de perte (probabilité qu'un paquet ne soit pas délivré à son destinataire). Il est donc très utile de pouvoir effectuer des mesures précises des valeurs réelles sur les paquets utiles, pour permettre l'administration, la configuration, la planification du réseau en mode paquet. Une bonne connaissance de ces caractéristiques facilite également la mise en place de services à qualité différenciée et garantie, par opposition au service "au mieux" ou "best effort" en anglais.

Une solution classique pour obtenir ce résultat consiste à employer une ou plusieurs sources qui émettent des paquets de test, souvent appelés "ping" dans le cas de réseau IP. Chaque paquet test est reconnu par son destinataire et renvoyé par celui-ci auprès de la source correspondante. Celle-ci peut alors effectuer des mesures, par exemple le temps aller-retour. Il est aussi possible d'effectuer des traitements statistiques à partir des mesures faites sur.un grand nombre de paquets; par exemple estimer les caractéristiques des durées de transfert aller -retour (maximum, minimum, moyenne, médiane, etc.....).

Une autre solution utilisée consiste à pourvoir une partie des sources et des destinataires d'une connaissance suffisamment précise d'une référence de temps commune. Les sources génèrent des paquets de test et notent l'heure de départ. Les destinataires notent l'heure de réception de ces paquets de test. Des calculs sont ensuite effectués pour caractériser par exemple les durées de transfert et les taux de perte.

Néanmoins, ces solutions ne permettent pas d'obtenir une bonne précision dans tous les cas. En effet, le nombre de paquets de test doit rester petit pour ne pas trop charger le réseau ni mobiliser trop d'équipements. Les estimations statistiques peuvent donc être entachées d'une imprécision importante. Par ailleurs, les réseaux en mode paquet n'offrent souvent pas des caractéristiques identiques pour les chemins aller et retour entre deux points d'accès. De plus, les équipements de réseau en mode paquet (par exemple les routeurs et commutateurs) effectuent souvent l'analyse du contenu du paquet (par exemple le protocole de transport de bout en bout, le type de données, le type de fichier contenu dans le paquet, etc...), pour en déduire une méthode d'acheminement du paquet, la file d'attente, ou la priorité, etc... Il n'est donc pas certain que les paquets de test empruntent le même chemin que les paquets contenant les données réelles des usagers du réseau. Il en résulte une grande incertitude sur la mesure du temps de transfert des paquets contenant les données réelles des usagers du réseau.

On connaît également par le brevet US 5,521,907 une autre solution permettant d'effectuer une mesure non-intrusive entre deux points d'un réseau connu. Cependant, cette solution est strictement limitée à des réseaux utilisant un mode connecté, par exemple relais de trame (frame relay en anglais), et de ce fait, ne peut être utilisée dans des réseaux en mode non connecté, ni dans des réseaux à haut débit. En outre cette méthode ne permet pas l'analyse des pertes des paquets.

En outre, par le brevet US 5,535,193, on connaît une solution permettant de déterminer l'heure de passage de paquets par une pluralité d'analyseurs de réseau synchronisés. Cependant, cette solution utilise une liaison séparée pour le contrôle de la synchronisation, et impose donc que les analyseurs soient proches les uns des autres.

Le but de la présente invention est de pallier les inconvénients précités.

A cet effet, l'invention a pour objet un procédé et un système à architecture répartie permettant d'effectuer des mesures précises des durées de transfert et des taux de perte pour des réseaux de télécommunication en mode paquet. Le procédé comporte des étapes consistant à effectuer des opérations de mesure par une pluralité de sondes d'observation synchronisées et réparties en différents points du réseau, sur des paquets de données transmis par le réseau, les opérations de mesure comportant une datation et une identification des paquets de données, les résultats de mesure étant transmis par les sondes à un module collecteur.

Le procédé selon l'invention est caractérisé en ce que les opérations de mesure comprennent en outre une classification des paquets de données dans un flux homogène, et un comptage des paquets dans le flux, les résultats des mesures étant transmis entre les sondes et le module collecteur par le réseau, le module collecteur effectuant une corrélation des informations d'identification, de datation et de classification, relatives aux paquets, reçues des sondes, pour en déduire des délais de transfert d'un paquet entre deux sondes d'observation, et des délais de transfert unidirectionnels par flux ou groupe de flux d'information, et effectuant des comparaisons de comptages de paquets en différents points du réseau, reçus des sondes, pour déterminer un taux de perte de paquets.

Le procédé selon l'invention présente l'avantage de ne pas nécessiter l'utilisation de paquets de test, ce qui permet d'atteindre une très grande représentativité de chaque mesure. Il a également pour avantage de permettre d'effectuer un très grand nombre de mesures, ce qui permet d'offrir une très grande précision statistique. Enfin, le nombre de mesures effectuées peut être modulé en fonction des types de données véhiculés dans les paquets, ce qui permet une utilisation rationnelle des ressources disponibles du système.

Par ailleurs, la classification des paquets dans un flux homogène permet :

- d'affiner la mesure (par destination, par type d'application, ...) ;
- d'indicer l'espace de référence pour les signatures, et donc minimiser la probabilité de double signature et faciliter les corrélations flux entrant/flux sortant.

Un autre avantage de la classification des paquets de données dans un flux homogène permet de conserver une signature de petite longueur, tout en ayant une faible probabilité d'ambiguïté par signatures identiques sur des paquets différents. Ceci facilite grandement le fonctionnement du système sur le grand réseau.

En pratique, le flux est déterminé à partir des adresses réseau (qui déterminent les chemins), des adresses transport et des éventuels éléments qui permettent au réseau de choisir la qualité de service à appliquer. Des variantes sont possibles, par exemple de regrouper les adresses IP en sous-réseau correspondant à une destination unique. Dans le cas d'un réseau Internet, on pourra choisir les adresses IP source et destination, et soit le champ ToS (type of service), soit les ports sources et destinations TCP/UDP. D'autres regroupements peuvent être utilisés sans sortir du cadre de l'invention.

Le comptage du paquet dans le flux est utilisé pour la détermination des pertes de paquets dans le réseau. La taille du compteur dépend de l'implémentation, mais reste raisonnable en utilisant le fait relatif à un flux donné. Des implémentations courantes pourront se satisfaire de compteurs allant de 8 à 32 bits.

Le procédé selon l'invention permet également une mesure fine des pertes de paquets dans le réseau et un fonctionnement en réseau avec de nombreux point d'accès à la zone observée, tout en conservant une réalisation simple. Il peut également être appliqué à des flux point à multipoint.

Avantageusement, la signature qui identifie le paquet possède les trois caractéristiques suivantes :

- elle est conservée dans le réseau, quel que soit le point de mesure. Ceci conduit à ignorer pour sa détermination les champs correspondant aux couches physiques et aux couches réseaux de niveau inférieur à celle où le système fonctionne ;
- sa longueur est petite devant la longueur moyenne des paquets. Ceci permet de limiter la quantité d'information à communiquer au collecteur;
- la probabilité que deux paquets différents aient la même signature pour un flux donné est faible. Ceci permet de limiter le nombre de mesures invalidées.

Selon une autre caractéristique importante de l'invention, le procédé comporte une étape de filtrage et une étape d'échantillonnage semi-statique des classes obtenues par l'étape de classification.

Dans ce cas, seule une partie des combinaisons des paquets appartenant à une classe donnée sera retenue. Le taux d'échantillonnage dépend typiquement de la classe, et ne varie en principe pas de façon dynamique. Par exemple, on peut vouloir conserver toutes les combinaisons pour les paquets véhiculant de la voix, et une fraction de ceux véhiculant des fichiers informatiques.

En outre, chaque classe peut faire l'objet d'un échantillonnage dynamique, dont le taux dépend des conditions de congestion du système.

Une multiplicité de critères peut être utilisée pour que le fonctionnement global se situe automatiquement dans la zone la plus satisfaisante pour l'administrateur du dispositif, par exemple, le taux d'échantillonnage le plus fort pour un débit réseau maximum donné, ou encore le débit réseau minimum pour un taux d'échantillonnage donné.

Grâce au mécanisme d'échantillonnage, le procédé selon l'invention permet l'observation de réseaux de très grandes capacités et une réduction des flux remontés par les sondes vers le collecteur ainsi qu'une optimisation dynamique des caractéristiques de mesures, permettant une optimisation adaptative aux conditions de fonctionnement du système.

Selon une caractéristique importante de l'invention, la mesure des délais de transfert et le comptage du paquet dans un flux sont synchronisés en fonction d'une référence horaire absolue acquise par les sondes de mesure réparties dans le réseau.

La référence horaire absolue permet l'obtention des taux de perte et des temps de transfert pour chaque sens de communication. Par exemple, et en fonction de la précision et du coût recherché, elle peut être acquise par l'intermédiaire de dispositifs GPS, radio diffusion, protocoles réseaux.

Une prise de l'heure absolue de passage du paquet (horodatage) servira aux calculs de délais de transfert entre deux sondes. Par exemple, dans le cas d'un réseau Internet, on pourra choisir une précision de l'ordre de 100 µs.

Le système de mise en oeuvre du procédé selon l'invention est caractérisé en ce chaque sonde comporte en outre des moyens pour classifier les paquets de données dans un flux homogène, des moyens pour identifier chaque paquet, des moyens pour compter les paquets dans un flux, les moyens de transmission des sondes utilisant le réseau pour transmettre les résultats des mesures effectuées, au module collecteur, le module collecteur comprenant des moyens pour corréler les informations d'identification, de datation et de classification, relatives aux paquets, reçues des sondes, et en déduire des délais de transfert d'un paquet entre deux sondes d'observation, et des délais de transfert unidirectionnel par flux ou groupe de flux d'information, et des moyens pour déterminer un taux de perte de paquets en comparant les comptages de paquets en différents points du réseau, reçus des sondes.

D'autres caractéristiques et avantages de l'invention ressortiront de la description qui va suivre, prise à titre d'exemple non limitatif, en référence aux figures annexées dans lesquelles :

- la figure 1 représente schématiquement un exemple de déploiement de l'invention dans un réseau de télécommunication en mode paquet ;
- la figure 2 représente un schéma fonctionnel d'un système mettant en oeuvre un procédé selon l'invention;
- la figure 3 illustre schématiquement un exemple d'organisation fonctionnelle interne d'un système selon l'invention.
- La figure 4 représente un schéma fonctionnel illustrant le fonctionnement d'une sonde d'observation utilisée dans un système selon l'invention ;
- La figure 5 représente un schéma fonctionnel illustrant le fonctionnement d'un module collecteur utilisé dans un système selon l'invention ;
- les figures 6 à 15 illustrent schématiquement le fonctionnement d'un système conforme à l'invention.

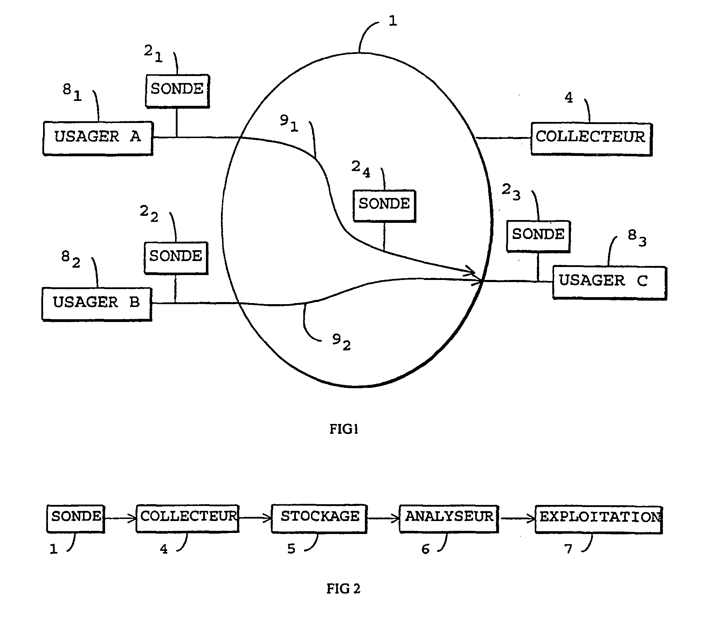

Sur la figure 1 est représenté schématiquement un réseau 1 à haut débit fonctionnant en mode non connecté, tel que par exemple un réseau à base du protocole IP (Internet Protocol). Une pluralité de sonde d'observation de flux $2_i$ sont disposées à différents points du réseau pour effectuer des mesures sur les flux de données échangées à travers ce réseau. Des moyens de compression de ces mesures sont prévus dans les sondes $2_i$ ainsi que des moyens de transmission vers un module collecteur 4. Ce dernier réalise les fonctions de collecte et de corrélation des mesures élémentaires effectuées par les sondes d'observation $2_i$.

Comme on peut le voir à la figure 2, ledit module collecteur 4 est relié à des moyens de stockage 5 qui communiquent avec des moyens d'analyse 6 des mesures réalisées. Les résultats de ces analyses sont ensuite envoyés à un module d'exploitation 7. Ces différents modules peuvent être physiquement dissociés, ou bien partiellement ou totalement localisés dans un ou des équipements physiques communs.

Le procédé selon l'invention se caractérisent essentiellement par :

- une étape de classification des paquets de données dans un flux homogène ;
- une étape de calcul d'une signature d'identification de chaque paquet ;
- une étape de comptage des paquets dans le flux ;
- une étape de mesure des délais de transfert unidirectionnels par flux ou groupe de flux d'information et du taux de perte de paquets.

L'ordre respectif de ces étapes peut varier suivant les différentes contraintes de réalisation.

Comme cela est illustré par la figure 1, des usagers $8_1$, $8_2$ et $8_3$ sont reliés au réseau 1. Les sondes d'observations $2_1$ et $2_4$ ont accès aux paquets $9_1$ émis par $8_1$ ; la sonde $2_2$ a accès aux paquets émis par $8_2$, la sonde $2_3$ a accès aux paquets reçus par $8_3$. Le module collecteur 4 est relié au réseau 1 et se comporte comme un usager de ce réseau 1 et il communique via ce réseau 1 avec les sondes $2_1$, $2_2$, $2_3$ et $2_4$ qui sont aussi des usagers du réseau 1. Ces sondes $2_1$, $2_2$, $2_3$ et $2_4$ effectuent les opérations de mesure pour chacun des paquets auxquels ils ont accès. Ces mesures consistent à réaliser la datation, la classification et l'identification des paquets, ainsi que les fonctions de compression de ces mesures. Chacune des sondes $2_1$ communiquent, via le réseau 1, les mesures compressées au module collecteur 4 qui corrèlent l'ensemble de ces mesures.

D'autres configurations de déploiement sont également possibles au titre de la présente invention, notamment les cas suivants :

- les usagers $8_i$ ne sont pas forcément les utilisateurs finaux des informations véhiculées dans les paquets ; ils peuvent représenter par exemple des réseaux locaux, ou d'autres réseaux en mode

paquet ;

- les sondes $2_i$ peuvent être reliés au module collecteur 4 par d'autres moyens que le réseau 1; par exemple, au moyen d'un autre réseau de télécommunication, ou au moyen d'un support de stockage local enregistrant des données du module collecteur 4 et les restituant à ce module collecteur 4 ultérieurement ;
- un même module collecteur 4 peut être relié à plusieurs module collecteur 4;
- plusieurs modules collecteurs 4 peuvent communiquer pour élaborer des corrélations entre les éléments de mesure dont ils disposent.

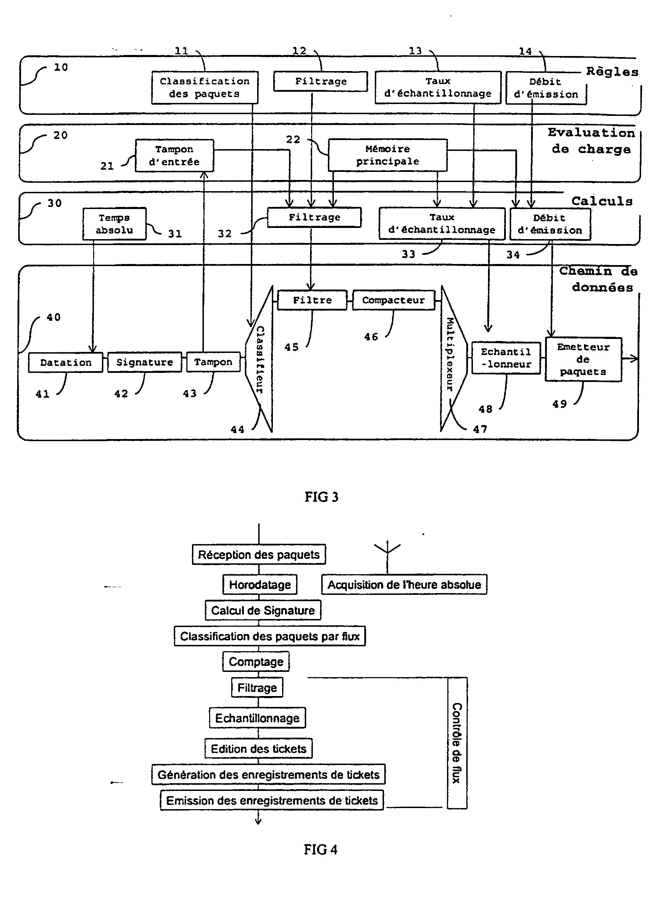

A titre d'exemple, un schéma fonctionnel possible du système selon l'invention est représenté à la figure 3. On y trouve quatre groupes fonctionnels :

- le groupe des règles 10, fixées de façon statique ou semi-statique (par exemple par l'exploitant du système) ;
- le groupe de l'évaluation de la charge 20, mesurant le taux de charge de l'unité centrale de traitement locale, les occupations mémoires, etc.... ;
- le groupe de calcul 30, évaluant dynamiquement les valeurs de compactage, d'échantillonnage, etc.... ;
- le groupe chemin de données 40, produisant des enregistrements contenant des combinaisons (classe, date, signature) pour chacun des paquets.

En fonctionnement, les sondes $2_i$ acquièrent une référence temporelle commune 31. L'imprécision de cette référence entre deux sondes $2_i$ affecte directement la précision du résultat de l'ensemble du dispositif. Les moyens d'acquisition de cette référence temporelle peuvent être divers et multiples ; citons à titre d'exemples non limitatifs le GPS (Global Positionning System), la diffusion au moyen d'ondes radio, les pilotes à haute stabilité, les protocoles NTP (Network Time Protocol) et SNTP (Simple Network Time Protocol) ;

- chaque paquet fait l'objet d'une datation 41 en utilisant la référence temporelle absolue lors de son observation par une sonde $2_i$. Celle-ci peut dater soit le début du paquet, soit la fin du paquet, soit tout autre critère ;
- chaque paquet fait l'objet d'un calcul de signature 42, destinée à le représenter par la suite. La signature permet de réduire le volume d'information nécessaire pour identifier le paquet. Cette signature est typiquement le résultat d'un calcul polynomial binaire (par exemple un calcul de CRC - Code de Redondance Cyclique - sur 16 ou 32 éléments binaires). Le calcul de signature est effectué sur tout le paquet ou sur une partie de celui-ci, en fonction de considération liée à la structure et à la variabilité du contenu des paquets dans le réseau. La signature doit être petite devant la taille moyenne du paquet, pour faciliter son stockage, sa transmission et sa manipulation ultérieure. Elle doit pouvoir prendre suffisamment de valeurs différentes pour rendre négligeable la probabilité que deux paquets aient une signature identique. A titre d'exemple, on peut considérer qu'une signature sur 16 éléments binaires permet d'identifier de l'ordre de 256 paquets différents avec une faible probabilité d'équivoque ;

- chaque paquet fait l'objet d'une opération de classification 44. Les critères de classification sont typiquement ceux classiquement retenus pour identifier des flux entre réseaux et sous-réseaux (sous-adresses réseau IP, par exemple), des flux entre équipements terminaux (adresses IP, par exemple), des flux entre applications (adresses IP et adresses transport UDP/TCP, par exemple), etc... Chaque paquet est alors identifié par une combinaison de tout ou partie des éléments : classe, date, signature ;
- chaque classe peut faire l'objet de filtrage 45 ; c'est-à-dire que les sondes $2_i$ ne mémorisent pas les combinaisons (classe, date, signature) des paquets appartenant à une des classes pour lesquelles le filtre est mis en place ;
- chaque classe peut faire l'objet d'une opération de compactage ou échantillonnage semi-statique 46. Dans ce cas, seule une partie des combinaisons (classe, date, signature) des paquets appartenant à une classe donnée sera retenue. Le taux d'échantillonnage dépend typiquement de la classe, et ne varie en principe pas de façon dynamique. Par exemple, on peut vouloir conserver toutes les combinaisons pour les paquets véhiculant de la voix, et une fraction de ceux véhiculant des fichiers informatiques ;
- chaque classe peut faire l'objet d'un échantillonnage dynamique, dont le taux dépend des conditions de congestion du système : mesure de l'occupation des tampons 21 et mémoires 22 des sondes $2_i$, débit d'émission vers le module collecteur 4, charge du réseau, charge du module collecteur 4, etc.... Une multiplicité de critères peut être utilisée pour que le fonctionnement global se situe automatiquement dans la zone la plus satisfaisante pour l'administrateur du dispositif. Par exemple le taux d'échantillonnage le plus fort pour un débit de remontée de la sonde vers le collecteur maximum donné, ou encore le débit de remontée vers le collecteur minimum pour un taux d'échantillonnage donné;
- à chaque combinaison (classe, date, signature) retenue est associé un compteur indiquant le nombre de paquet observé dans le flux. Le module collecteur 4 peut alors faire une mesure du taux de perte dans le réseau en comparant les compteurs associés aux mêmes paquets aux différents points du réseau.

Les opérations de filtrage et d'échantillonnage statique et dynamique permettent de réduire la quantité de combinaisons (classe, date, signature) à mémoriser et à traiter. La mise en place ou le retrait des filtres, les valeurs de taux d'échantillonnage semi-statique, le paramétrage de l'échantillonnage dynamique, etc..., peuvent par exemple être réalisées au moyen d'une opération d'administration effectuée depuis l'un des modules collecteurs 4 ou d'exploitation 7.

Les critères d'échantillonnage peuvent être divers. A titre d'exemple, on peut citer l'échantillonnage périodique qui consiste à garder une combinaison toutes les N combinaisons, l'échantillonnage statistique conditionné par le tirage d'une variable aléatoire dont on maîtrise les caractéristiques statistiques et l'échantillonnage sur signature qui consiste à ne garder que les combinaisons dont la signature appartient à un ensemble donné de valeurs.

L'ordre dans lequel une sonde $2_i$ effectue les opérations décrites précédemment peut varier. Une sonde $2_i$ peut classifier les paquets avant d'effectuer la datation, si cela n'affecte pas trop la précision de la mesure. De même, les opérations de filtrage peuvent être effectuées à différents instants du processus.

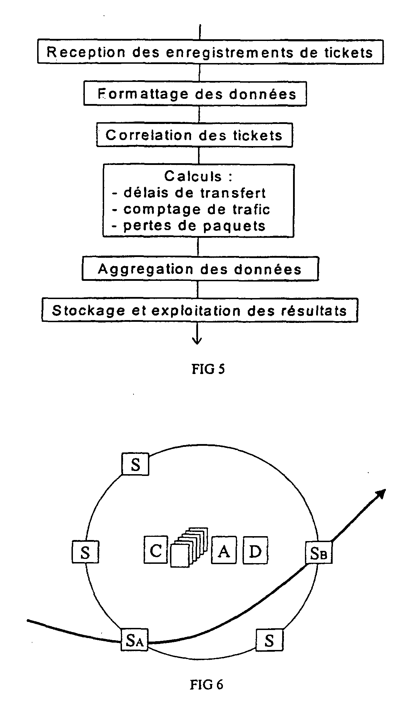

La figure 5 illustre les étapes de collecte et de corrélation des mesures par un module collecteur 4.

Ce dernier reçoit les échantillons des combinaisons (classe, date, signature) non filtrées en provenance de toutes les sondes d'observation $2_i$ qui lui sont rattachées ;

- chaque paquet est en principe vu par deux sondes d'observation $2_i$: une première fois à l'entrée dans le réseau et une deuxième à la sortie. Toutefois, d'autres cas sont possibles. Par exemple, un paquet peut n'être vu qu'une fois si le domaine de surveillance des sondes $2_i$ n'est pas clos, ou plus de deux fois si il y a des sondes d'observation $2_i$ à l'intérieur du réseau ;

- chaque observation du passage du paquet auprès d'une sonde d'observation $2_i$ donne lieu à la réception par le module collecteur 4 d'une combinaison (classe, date, signature) sauf s'il y a filtrage, échantillonnage ou perte du message de retour, etc...) ;

- le module collecteur 4 corrèle les combinaisons (classe, date, signature) concernant un même paquet, par exemple en utilisant la comparaison des signatures et en majorant des délais de transit dans le réseau ;

- en cas de succès, il en déduit par un calcul arithmétique simple, d'une part, le délai de transfert entre les différentes sondes d'observation $2_i$ pour le paquet considéré, et d'autre part, le nombre de paquets éventuellement perdus dans le réseau. De plus, un excès de paquets en sortie permet d'indiquer une défaillance d'un des équipements du réseau, ou une tentative d'intrusion. Des calculs plus évolués tels que par exemple des valeurs moyenne, minimale, maximale, médiane, etc.... pour une tranche de temps et un type de flux donné peuvent également être effectués dans le module collecteur 4 avant stockage dans le module de stockage 5.

Le choix d'un ensemble de critères de filtrage et d'échantillonnage statique et dynamique cohérents pour la totalité des sondes d'observation $2_i$ attachés à un module collecteur 4 facilite les opérations de corrélation effectuées par ce dernier, et améliore la proportion des corrélations réussies.

Selon une variante du procédé selon l'invention, on peut ne pas souhaiter mesurer certains flux. Dans ce cas, les mesures correspondantes sont filtrées, ce qui permet de ne pas générer de charges inutiles dans les sondes $2_i$.

Pour chaque paquet, un ticket est édité et comprend typiquement 3 parties : l'heure de passage du paquet, la signature du paquet et la valeur du compteur associé au flux (valeur absolue, ou nombre de paquets depuis le dernier ticket édité). Pour un flux donné, les tickets sont regroupés dans une structure commune avant transmission vers le module collecteur 4. Ce regroupement permet de mettre en facteur les éléments longs (identificateur du flux), et donc de diminuer la quantité globale d'informations à remonter vers le module collecteur 4. La transmission des enregistrements de tickets vers ledit module collecteur 4 a lieu par exemple lorsque la longueur maximale de l'enregistrement est atteinte, ou sur hors-temps, si les sondes $2_i$ ne voient plus de paquet passer pour un flux donné.

Un avantage important du procédé selon l'invention provient du fait que le flux des enregistrements de tickets entre les sondes et le module collecteur 4 reste petit devant le volume des flux mesurés. Ceci permet notamment de surveiller des réseaux de dimension importante et éventuellement d'utiliser le réseau surveillé lui-même pour acheminer les informations entre les sondes $2_i$ et les modules collecteurs 4.

Cette réduction est obtenue notamment par le fait que les tickets ont une taille relativement petite par rapport à la longueur moyenne des paquets observés comme cela a été dit plus haut et grâce à l'échantillonnage des paquets mesurés qui permet de limiter le nombre de tickets émis vers le module collecteur 4.

Cet échantillonnage consiste, au sein d'un flux, donc après classification, à sélectionner les paquets qui donneront lieu à l'émission d'un ticket. Ceux qui ne sont pas sélectionnés sont juste comptés. Les critères d'échantillonnage peuvent varier mais, pour permettre au module collecteur 4 d'effectuer les corrélations entrée/sortie ultérieures, il est important qu'ils soient communs à toutes les sondes $2_i$ d'un même module collecteur 4. En effet, si ce n'était pas le cas, la probabilité d'avoir un ticket à l'entrée et à la sortie du domaine d'observation pour un même paquet serait très faible, et donc le taux de corrélations réussies aussi très faible. En outre ces critères doivent être relatifs au contenu binaire des paquets, qui constitue la seule information " absolue " dont on dispose par hypothèse.

Les critères et paramètres éventuellement associés peuvent être différents pour chacun des flux. Ceci permet un échantillonnage adapté à chaque type de flux. Par exemple, dans le cas d'un réseau Internet, on pourra décider d'un fort taux d'échantillonnage des paquets véhiculant de la voix (compression moyenne, précision forte), et d'un taux plus faible pour les paquets de données (compression forte, précision moyenne).

A titre d'exemple de critère, on peut retenir un critère basé sur l'analyse de la signature des paquets : les paquets dont la signature est multiple d'une certaine valeur seront échantillonnés. Bien entendu, tout autre relation arithmétique convenable peut être utilisée sans sortir du cadre de l'invention).

Notons que l'échantillonnage ne diminue pas la précision du comptage. Ceci est également vrai en cas de perte de paquets qui auraient dû donner lieu à l'édition de tickets. En effet le compteur associé à chaque ticket généré donne le nombre total de paquets depuis le dernier ticket échantillonné. Le seul effet est la perte de précision quant à l'instant exact de la perte et de l'identité précise du paquet perdu. Ces deux caractéristiques sont a priori peu utiles, donc rarement recherchées. Toutefois, les caractéristiques d'échantillonnage étant attachées à un flux, il est toujours possible de ne pas échantillonner les flux pour lesquels on désire l'information détaillée. Pour ces flux, tous les paquets donneront lieu à l'édition d'un ticket. En outre, le nombre de mesure étant inférieur au nombre de paquets, on pourra appliquer les lois statistiques bien connues quant à la validité et la précision des mesures appliquées à l'échantillon ainsi capturé.

Ainsi, le procédé selon l'invention permet d'effectuer un contrôle de flux au niveau de la sonde en vue de :

- protéger le module collecteur 4 contre une surcharge : (trop de tickets à traiter par rapport à ses ressources propres qui sont la puissance de traitement disponible et taille mémoire, ...) ;
- protéger les sondes $2_i$ contre une surcharge (trop de tickets à traiter par rapport à ses ressources propres puissance de traitement disponible, taille mémoire, ...) ;
- protéger le réseau utilisé pour l'émission des enregistrements de tickets de la sonde vers le collecteur ;
- s'adapter à des variations de la capacité du réseau utilisé pour l'émission des enregistrements de tickets des sondes $2_i$ vers le module collecteur 4 ;
- permettre une répartition optimum de la ressource de mesures entre les différents flux en cas de congestion ;
- optimiser le couple (précision des mesures/charge réseau) en fonction de critères combinés, en fonctionnement normal.

Pour contrôler le flux, les fonctions suivantes peuvent être utilisés, isolément ou de façon combinée :

- limitation à une valeur maximale du flux global dans le réseau dû à l'émission des enregistrements de tickets des sondes $2_i$ vers le module collecteur 4. Cette limite peut être soit déterminée par configuration initiale, ou être modulée par le module collecteur 4, ou un dispositif externe d'exploitation du réseau ;
- limitation de la fréquence d'échantillonnage à une valeur maximale. Cette limite peut être soit déterminée par configuration initiale, ou être réalisée par le module collecteur 4, ou un dispositif externe d'exploitation du réseau. Elle peut en outre être différente pour chacun des types de flux ou de groupement de flux ;
- diminution de la fréquence d'échantillonnage. Cette diminution peut être soit déterminée localement par observation de la congestion des sondes $2_i$, ou être fixée par le module collecteur 4, ou un dispositif externe d'exploitation du réseau. Cette diminution peut être différente pour chacun des types de flux ou de groupement de flux. La loi de diminution doit permettre au module collecteur 4 de corréler des enregistrements effectuées par des sondes $2_i$ n'ayant pas la même valeur d'échantillonnage pour un flux donné, la diminution n'étant pas forcément synchrone entre les différentes sondes $2_i$. Un principe qui peut être retenu est celui de l'inclusion : les tickets des flux " diminués " doivent être également compris dans les tickets des flux " moins diminués ". De. cette façon, les tickets de la sonde $2_i$ ayant le plus grand facteur de diminution pourront toujours être corrélés avec les tickets de la sonde $2_i$ ayant un coefficient de diminution inférieur ;
- modulation de la fréquence d'échantillonnage en fonction de l'état de congestion local à la sonde $2_i$, des caractéristiques de remontée des tickets vers le module collecteur 4, de la répartition de la charge entre les différents types de flux. Cette modulation a pour objectif d'assurer le fonctionnement des sondes $2_i$, en s'adaptant aux conditions instantanées de charge des différents composants du système. Elle gère l'évolution entre un état " médiocre " correspondant à une précision faible et à un trafic généré fort et un état " excellent " correspondant à une précision forte et à un trafic généré faible. L'évolution entre les zones " médiocre " et " excellent " peut être variée.

Les principales fonctions du module collecteur 4 sont illustrées par la figure 5. L'ordre respectif des fonctions peut varier suivant les différentes contraintes de réalisation sans sortir du cadre de l'invention.

Les formules ci-après sont mises en oeuvre par la fonction de calcul du module collecteur 4, pour un flux F donné.

Les notations utilisées sont :

$D_{es}(p)$ = délai de transfert du point d'entrée (e) au point de sortie (s) du paquet p.
Te(p) = ticket associé au paquet (p) par la sonde au point d'entrée.
Ts(p) = ticket associé au paquet (p) par la sonde au point de sortie.
He (p) = horodatage dans le ticket associé au paquet (p) par la sonde au point d'entrée.
Hs (p) = horodatage dans le ticket associé au paquet (p) par la sonde au point de sortie.
Ce(p) = compteur dans le ticket associé au paquet (p) par la sonde au point d'entrée.
Cs(p) = compteur dans le ticket associé au paquet (p) par la sonde au point de sortie.
Ne(pq) = nombre de paquets entre le passage des paquets p et q au point d'entrée.
Ns (pq) = nombre de paquets entre le passage des paquets p et q au point de sortie.
Pes (pq) = nombre de paquets perdus entre le passage du paquet p et du paquet q.

La mesure des délais de transfert est effectuée comme suit:

Pour chaque couple de tickets (Ts(p) ; Te(p)) correspondant à la traversée d'un même paquet (p) dans le réseau observé, le délai de transfert $D_{es}(p)$ se déduit simplement par :

$$D_{es} \ (p) = Hs \ (p) - He \ (p)$$

Le comptage des paquets est effectué comme suit:

Soient les couples de tickets (Ts(p) ; Te(p)) et (Ts(q) ; Te(q)), correspondant à la traversée des paquets (p) et (q) appartenant au même flux dans le réseau observé, et tels que le ticket Ts(q) soit consécutif du ticket Ts(p) pour la sonde $2_i$ au point de sortie.

Le nombre Ns(pq) de paquets entre le passage des paquets p et q au point de sortie se déduit simplement de la définition du compteur associé au ticket de sortie :

$$Ns \ (pq) = Cs \ (q)$$

Le nombre Ne(pq) de paquets entre le passage des paquets p et q au point d'entrée est égal à la somme des compteurs des tickets d'entrée entre celui associé à p (non compris) et celui associé à q (y compris). Ceci permet de prendre en compte par exemple le cas des paquets perdus qui auraient dû donner lieu à l'édition d'un ticket de sortie :

$$Ne(pq) \ = \ \sum_{i=p+1}^{i=q} Ce(i)$$

Le comptage des pertes de paquets est effectué comme suit:

Le nombre Pes(pq) de paquets perdus dans le réseau entre le passage des paquets p et q est alors égal à :

$$Pes \ (pq) = Ne \ (pq) - Ns \ (pq)$$

A titre d'exemple de mise en oeuvre du procédé selon l'invention, la figure 6 schématise un exemple de réseau dans lequel la sonde d'entrée est $S_A$, la sonde de sortie est $S_B$. Ces sondes sont déjà synchronisées et possèdent une référence temporelle commune. Le critère d'échantillonnage retient les paquets dont la signature vaut 0 modulo 16. La signature est sur 2 digits, l'horodatage sur 4. L'unité de temps n'est pas précisée.

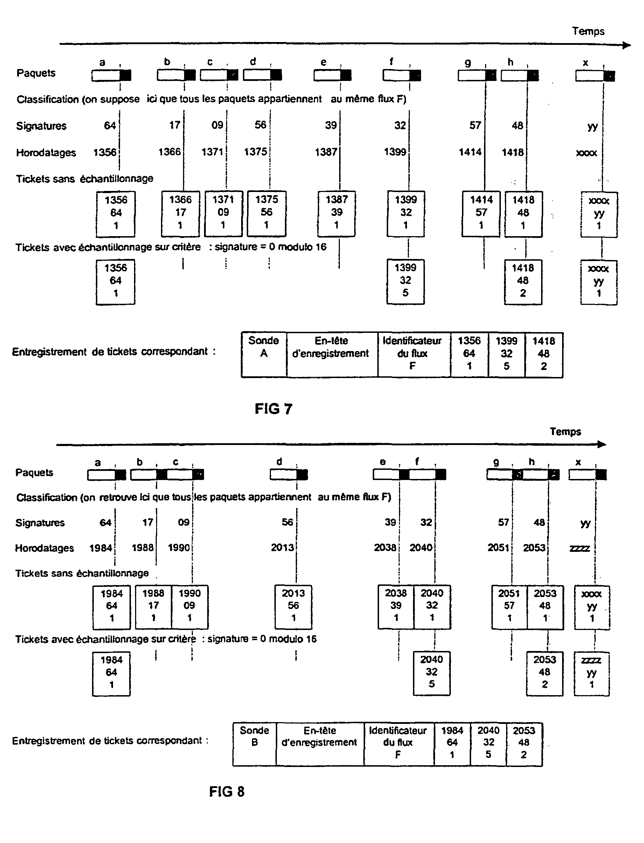

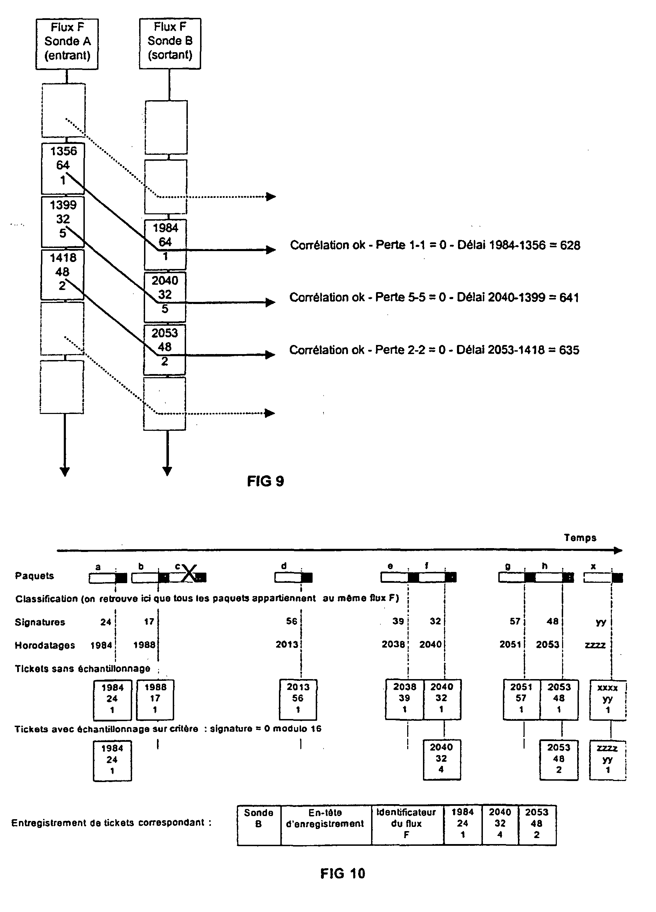

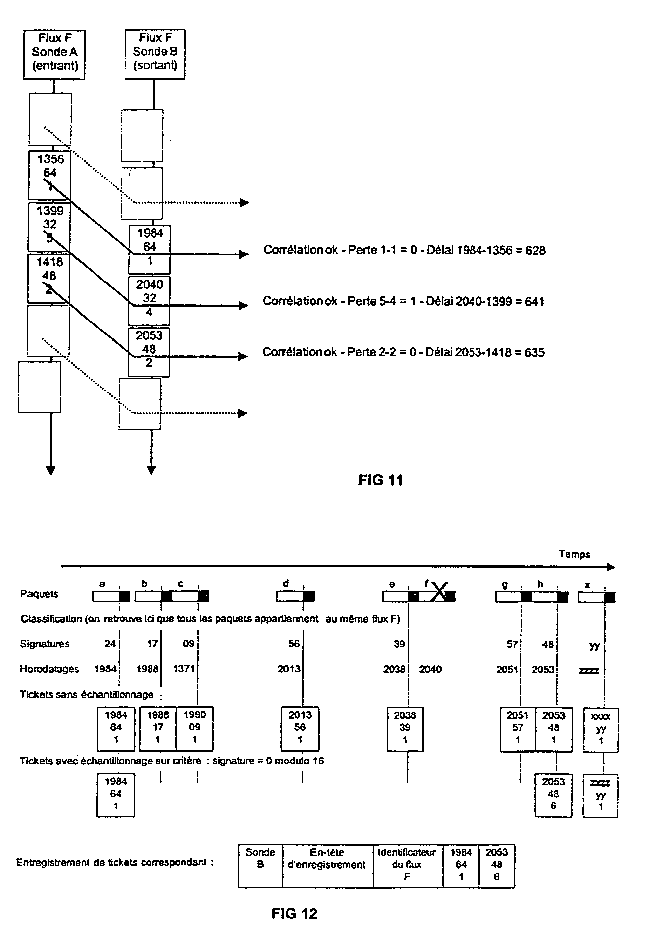

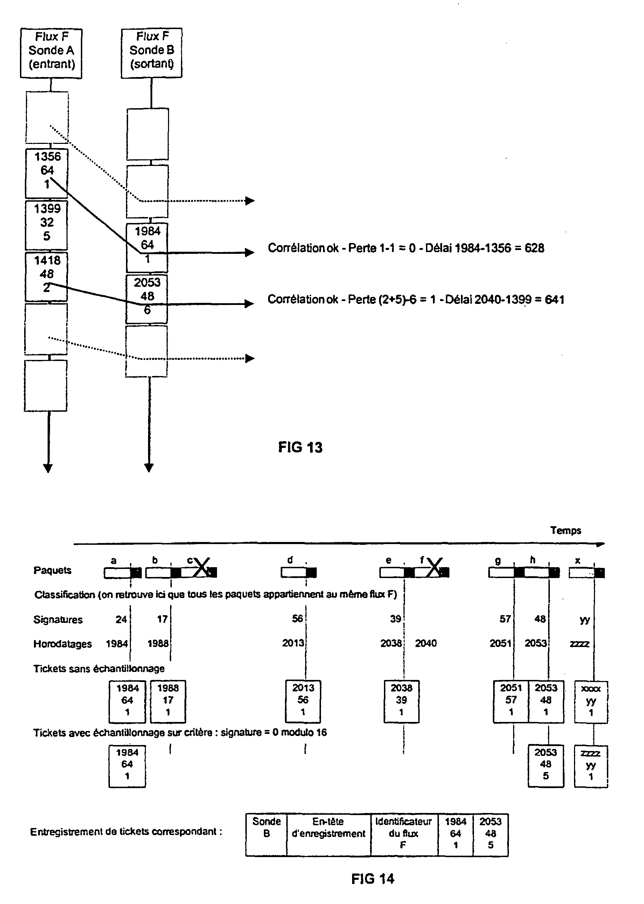

Les figures 7 à 15 illustrent différents cas où l'on considère la même séquence de paquets en entrée, donnant lieu à la même séquence de tickets par la sonde $S_A$.

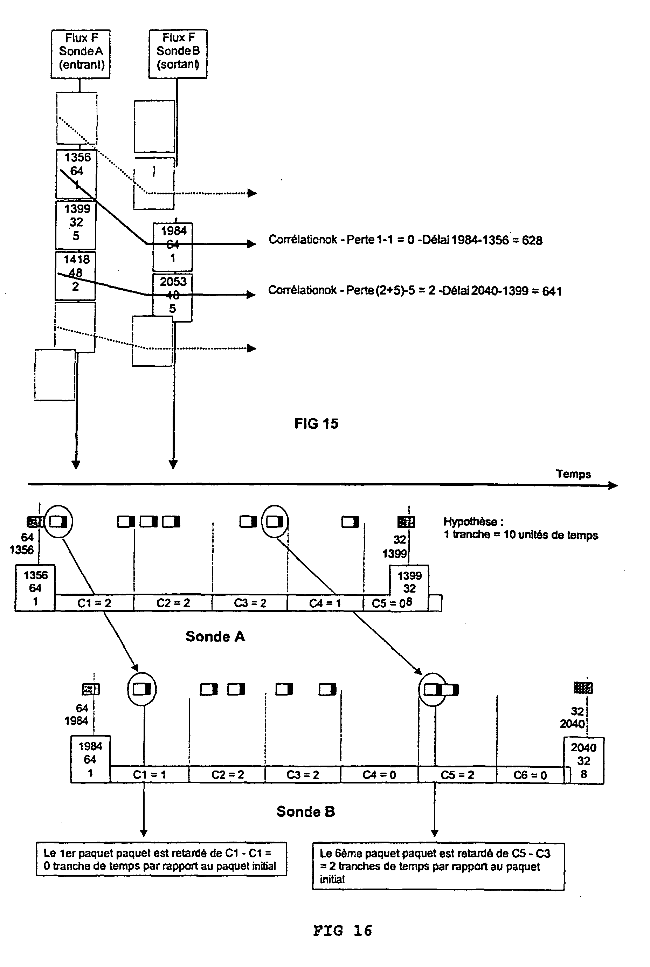

Selon un mode particulier de réalisation de l'invention illustré par la figure 16, adapté au cas où la fréquence d'échantillonnage est faible, c'est-à-dire quand de nombreux paquets ne donnent pas lieu à l'émission d'un ticket, pour un flux donné, on divise le temps en tranches, depuis l'instant d'observation du paquet ayant donné lieu à l'édition du dernier ticket. La taille de la tranche peut être fixée localement à la sonde, par le collecteur, varier selon différents critères ;

- on associe un compteur à chaque tranche de temps ;
- on incrémente, lors du passage de chaque paquet ne donnant pas lieu à l'édition d'un ticket, le compteur associé à la tranche de temps correspondant à l'instant du passage ;
- et on joint, lors du passage du prochain paquet donnant lieu à l'édition d'un ticket, la liste des compteurs ainsi obtenu.

Ce mécanisme permet au module collecteur 4 d'obtenir, par comparaison des compteurs issus des sondes $2_i$ en entrée et en sortie, une mesure de la variation des délais de transfert des paquets circulant entre les paquets ayant donné lieu à l'édition des tickets et qui ont donc fait l'objet d'une mesure globale. On fait également l'hypothèse que les paquets appartenant à un même flux ne se doublent pas dans le réseau, ce qui est généralement le cas.

La précision obtenue est de l'ordre de grandeur de la " tranche " de temps retenue (compromis entre le nombre de tranches - et donc de compteurs à remonter - et la précision).

Notons que ce mécanisme ne fonctionne bien que si le taux de perte de paquet est nul ou faible pour la période considérée.

Les principaux avantages de ce mode de réalisation sont :

- affinage de la mesure de délai : les paquets n'ayant pas donné lieu à l'émission d'un ticket participent tout de même à la mesure ;
- insensibilité à l'augmentation du nombre de paquets observés : une multiplication du nombre de paquets observée ne donnera pratiquement pas lieu à augmentation du trafic de remontée entre les sondes $2_i$ et le collecteur module 4.

## Revendications

1. Procédé non-intrusif de mesure de taux de perte et de durées de transfert de données dans un réseau de télécommunication en mode paquet, comportant des étapes consistant à effectuer des opérations de mesure par une pluralité de sondes d'observation ($2_i$) synchronisées et réparties en différents points du réseau (1), sur des paquets de données transmis par le réseau, les opérations de mesure comportant une datation et une identification des paquets de données, les résultats de mesure étant transmis par les sondes à un module collecteur (4), **caractérisé en ce que** les opérations de mesure comprennent en outre une classification des paquets de données dans un flux homogène, et un comptage des paquets dans le flux, les résultats des mesures étant transmis entre les sondes et le module collecteur par le réseau (1), le module collecteur effectuant une corrélation des informations d'identification, de datation et de classification, relatives aux paquets, reçues des sondes, pour en déduire des délais de transfert d'un paquet entre deux sondes d'observation, et des délais de transfert unidirectionnels par flux ou groupe de flux d'information, et effectuant des comparaisons de comptages de paquets en différents points du réseau, reçus des sondes, pour déterminer un taux de perte de paquets.

2. Procédé selon la revendication 1, **caractérisé en ce que** l'identification d'un paquet de données consiste à calculer une signature d'identification sur le contenu du paquet.

3. Procédé selon la revendication 1 ou 2, **caractérisé en ce que** chaque paquet observé fait l'objet d'une datation selon une référence temporelle commune acquise par les sondes d'observation ($2_i$).

4. Procédé selon la revendication 3, **caractérisé en ce qu'**un ticket comprenant l'heure de passage du paquet, la signature du paquet et la valeur d'un compteur associé au flux ou au groupe de flux est édité.

5. Procédé selon l'une des revendications 1 à 4, **caractérisé en ce qu'**il comporte en outre une étape de filtrage et une étape d'échantillonnage semi-statique des classes obtenues par l'étape de classification, l'échantillonnage consistant à sélectionner les paquets qui donneront lieu à l'émission d'un ticket.

6. Procédé selon l'une des revendications 1 à 5, **caractérisé en ce qu'**il comporte une étape d'échantillonnage dynamique dont le taux dépend des conditions de congestion du système.

7. Procédé selon la revendication 5 ou 6, **caractérisé en ce que** l'échantillonnage est effectué à une fréquence d'échantillonnage qui peut, soit être limitée à une valeur maximale déterminée par configuration initiale, soit être modulée par le module collecteur (4) ou un dispositif externe d'exploitation du réseau (1).

8. Procédé l'une des revendications 1 à 7, **caractérisé en ce que** chaque paquet est classé selon ses caractéristiques de destination ou selon le type de son contenu.

9. Procédé selon l'une des revendications 4 à 8, **caractérisé en ce que** pour un flux F donné, la détermination des délais de transfert est effectuée comme suit:

$$D_{es}\,(p) = Hs\,(p) - He\,(p)$$

où :

$D_{es}(p)$ est le délai de transfert entre un point d'entrée (e) et un point de sortie (s) du paquet p ;
He (p) est l'horodatage dans le ticket associé au paquet (p) par la sonde au point d'entrée ;
Hs(p) est l'horodatage dans le ticket associé au paquet (p) par la sonde au point de sortie.

10. Procédé selon l'une des revendications 1 à 9, **ca-**

ractérisé en ce que le calcul des durées de transfert dans différentes portions du réseau (1) est réalisé par une opération de mise en correspondance des combinaisons (classe, date, signature) appartenant à un même paquet observé par plusieurs sondes ($2_i$).

11. Procédé selon l'une des revendications 1 à 10, **caractérisé en ce que**, pour un flux donné, le taux de perte de paquets est déterminé en calculant le nombre Pes(pq) de paquets perdus dans le réseau entre le passage de paquets p et q, donné par la formule :

$$Pes\ (pq) = Ne\ (pq) - Ns\ (pq)$$

où :

Ne(pq) est le nombre de paquets entre les passages des paquets p et q à un point de sortie ; Ns(pq) est le nombre de paquets entre les passages des paquets p et q à un point d'entrée.

12. Procédé selon la revendication 7, **caractérisé en ce que**, au cas où la fréquence d'échantillonnage est faible, on divise le temps en tranches depuis l'instant d'observation du paquet ayant donné lieu à l'édition du dernier ticket, la taille de la tranche pouvant être fixée localement à la sonde ($2_i$) ou par le module collecteur (4), on associe un compteur à chaque tranche de temps, on incrémente, lors du passage de chaque paquet ne donnant pas lieu à l'édition d'un ticket, le compteur associé à la tranche de temps correspondant à l'instant du passage, et on joint, lors du passage du prochain paquet donnant lieu à l'édition d'un ticket, la liste des compteurs ainsi obtenu.

13. Système à architecture répartie de mesure non-intrusive de taux de perte et de durées de transfert de données dans un réseau de télécommunication en mode paquet, ledit système comportant une pluralité de sondes d'observation ($2_i$) de flux, disposées à différents points du réseau (1), et des moyens de transmission de ces mesures vers un module collecteur (4) comportant des moyens d'analyse (6) desdites mesures, **caractérisé en ce que** chaque sonde ($2_i$) comporte en outre des moyens pour classifier les paquets de données dans un flux homogène, des moyens pour identifier chaque paquet, des moyens pour compter les paquets dans un flux, les moyens de transmission des sondes utilisant le réseau pour transmettre les résultats des mesures effectuées, au module collecteur (4), le module collecteur comprenant des moyens pour corréler les informations d'identification, de datation et de classification, relatives aux paquets, reçues des sondes, et en déduire des délais de transfert d'un paquet entre deux sondes d'observation, et des délais de transfert unidirectionnel par flux ou groupe de flux d'information, et des moyens pour déterminer un taux de perte de paquets en comparant les comptages de paquets en différents points du réseau, reçus des sondes.

14. Système selon la revendication 13, **caractérisé en ce que** les moyens d'identification de chaque sonde ($2_i$) comprennent des moyens pour calculer une signature d'identification de chaque paquet.

15. Système selon la revendication 13 ou 14, **caractérisé en ce que** chaque sonde ($2_i$) comprend en outre des moyens de compression des mesures effectuées pour compresser les résultats de mesure avant de les transmettre au module collecteur (4).

## Patentansprüche

1. Nicht-intrusives Messverfahren für die Messung der Datenverlustzahl und der Datenübertragungsdauer in einem Telekommunikationsnetz im Paketmodus, das Verfahrenschritte umfasst, die darin bestehen mit einer Vielzahl von Beobachtungssonden (2i), die synchronisiert und an verschiedenen Netzwerkpunkten (1) verteilt sind, auf von dem Netzwerk übertragene Datenpakete Messvorgänge durchzuführen, wobei die Messvorgänge eine Datierung und eine Erkennung der Datenpaketen umfassen und die Messergebnisse von den Sonden an ein Sammelmodul (4) übertragen werden,
   **dadurch gekennzeichnet, dass** die Messvorgänge außerdem eine Klassifikation der Datenpakete in einem einheitlichen Datenfluss und eine Paketzählung in dem Datenfluss umfassen, wobei die Messergebnisse von dem Netzwerk (1) zwischen den Sonden und dem Sammelmodul übertragen werden, wobei das Sammelmodul eine Korrelation der von den Sonden empfangenen Erkennungs-, Datierungs- und Klassifikationsinformationen über die Pakete durchführt, um davon Übertragungszeiten für ein Paket zwischen zwei Beobachtungssonden und Übertragungszeiten in eine Richtung je Informationsfluss oder Informationsflussgruppe abzuleiten und wobei es Vergleiche der von den Sonden empfangenen Paketzählungen an verschiedenen Netzwerkpunkte durchführt, um eine Paketverlustzahl zu ermitteln.

2. Verfahren nach Anspruch 1, **dadurch gekennzeichnet, dass** die Erkennung eines Datenpakets darin besteht, eine Erkennungsunterschrift auf dem Paketinhalt zu berechnen.

3. Verfahren nach Anspruch 1 oder 2, **dadurch ge-**

**kennzeichnet, dass** jedes beobachtete Datenpaket einer Datierung nach einer von den Beobachtungssonden (2i) erfassten gemeinsamen zeitlichen Bezugsnummer unterworfen wird.

4. Verfahren nach Anspruch 3, **dadurch gekennzeichnet, dass** ein Schein mit der Uhrzeit des Paketdurchlaufs, der Paketunterschrift und dem Wert eines dem Datenfluss oder der Datenflussgruppe zugewiesenen Zählers ausgegeben wird.

5. Verfahren nach einem der Ansprüche 1 bis 4, **dadurch gekennzeichnet, dass** es außerdem einen Filtrierschritt und einen halbstatischen Probenahmeschritt der bei dem Klassifikationsschritt erhaltenen Klassen umfasst, wobei der Probenahmeschritt darin besteht, die Datenpakete auszuwählen, für welche ein Schein ausgegeben wird.

6. Verfahren nach einem der Ansprüche 1 bis 5, **dadurch gekennzeichnet, dass** es einen dynamischen Probenahmeschritt umfasst, dessen Rate von dem Blockierungszustand des Systems abhängt.

7. Verfahren nach Anspruch 5 oder 6, **dadurch gekennzeichnet, dass** der Probenahmeschritt mit einer Probenahmehäufigkeit durchgeführt wird, die entweder auf einen durch die Ausgangskonfiguration bestimmten Maximalwert beschränkt, oder von dem Sammelmodul (4) oder von einer äußeren Betriebsvorrichtung vom Netzwerk (1) moduliert werden kann.

8. Verfahren nach einem der Ansprüche 1 bis 7, **dadurch gekennzeichnet**, das jedes Datenpaket nach seinen Empfangseigenschaften oder nach der Art seines Inhalts klassifiziert wird.

9. Verfahren nach einem der Ansprüche 4 bis 8, **dadurch gekennzeichnet, dass** für einen bestimmten Datenfluss F, die Bestimmung der Übertragungszeiten nach folgender Weise erfolgt :

$$D_{es}\,(p) = Hs\,(p) - He\,(p)$$

wobei

$D_{es}(p)$ die Übertragungszeit zwischen einem Eingangspunkt (e) und einem Ausgangspunkt (s) des Datenpakets p ist;

He (p) der Zeitstempel auf dem von der Sonde dem Datenpaket (p) am Eingangspunkt zugewiesenen Schein ist.

Hs(p) der Zeitstempel auf dem von der Sonde dem Datenpaket (p) am Ausgangspunkt zugewiesenen Schein ist.

10. Verfahren nach einem der Ansprüche 1 bis 9, **dadurch gekennzeichnet, dass** die Berechnung der Übertragungsdauern in verschiedenen Netzwerkabschnitten (1) ein Zuordnungsvorgang der einem selben, von mehreren Sonden (2i) beobachteten Datenpaket gehörenden Kombinationen (Klasse, Datum, Unterschrift) ist.

11. Verfahren nach einem der Ansprüche 1 bis 10, **dadurch gekennzeichnet, dass** für einen bestimmten Datenfluss, die Paketverlustzahl durch Berechnung der Anzahl Pes(pq) der im Netzwerk zwischen den Paketdurchläufen p und q verlorenen Pakete, gemäß folgender Formel ermittelt wird:

$$Pes\,(pq) = Ne\,(p) - Ns\,(p)$$

wobei

Ne(pq) die Paketanzahl zwischen den Paketdurchläufen p und q an einem Ausgangspunkt ist

Ns(pq) die Paketanzahl zwischen den Paketdurchläufen p und q an einem Eingangspunkt ist.

12. Verfahren nach Anspruch 7, **dadurch gekennzeichnet, dass** im Fall einer geringen Probenahmehäufigkeit, die Zeit ab dem Beobachtungszeitpunkt des Datenpakets für welches der letzte Schein ausgegeben wurde in Zeitabschnitte unterteilt wird, wobei die Größe des Zeitabschnitts örtlich von der Sonde ($2_i$) oder von dem Sammelmodul (4) festgelegt werden kann, wobei jedem Zeitabschnitt ein Zähler zugewiesen wird, wobei bei jedem Paketdurchlauf für welchen kein Schein ausgegeben wird, der dem Zeitabschnitt der dem Durchlaufzeitpunkt entspricht zugewiesene Zähler inkrementiert wird, und wobei bei dem Durchlauf des nächsten Datenpakets für welches ein Schein ausgegeben wird, die auf diese Weise erhaltene Zählerliste zugefügt wird.

13. System mit verteilter Architektur für die nichtintrusive Messung der Datenverlustzahl und der Datenübertragungsdauer in einem Telekommunikationsnetz im Paketmodus, wobei das genannte System eine Vielzahl von Flussbeobachtungssonden ($2_i$), die an verschiedenen Netzwerkpunkten (1) angeordnet sind, und Mittel zur Übertragung dieser Messwerte zu einem Sammelmodul (4) umfasst, das Analysemittel (6) für die genannten Messwerte aufweist,

**dadurch gekennzeichnet, dass** jede Sonde ($2_i$) außerdem Mittel für die Klassifizierung der Datenpakete in einem einheitlichen Datenfluss, Mittel für die Erkennung jedes Datenpakets, Mittel für die Paketzählung in einem Datenfluss umfasst, wobei die Übertragungsmittel der Sonden das Netzwerk benutzen, um die Ergebnisse der durchgeführten Messvorgängen an das Sammelmodul (4) zu übermitteln, wobei das Sammelmodul Mittel zur Korrelation der von den Sonden übermittelten Erkennungs- Datierungs- und Klassifizierungsinformationen über jedes Paket, um daraus Übertragungszeiten für ein Datenpaket und Übertragungszeiten in eine Richtung je Informationsfluss zwischen zwei Beobachtungssonden abzuleiten, sowie Mittel zur Bestimmung einer Datenverlustzahl, durch Vergleich der von den Sonden übermittelten Paketzählungen an verschiedenen Netzwerkpunkten umfasst.

14. System nach Anspruch 13, **dadurch gekennzeichnet, dass** die Erkennungsmittel einer jeden Sonde $(2_i)$ Mittel zur Berechnung einer Erkennungsunterschrift für jedes Datenpaket umfassen.

15. System nach Anspruch 13 oder 14, **dadurch gekennzeichnet, dass** jede Sonde $(2_i)$ außerdem Mittel zur Verdichtung der durchgeführten Messungen umfasst, um die Messergebnisse vor ihrer Übertragung an das Sammelmodul (4) zu verdichten.


**Claims**

1. Non-intrusive method for measuring the data loss ratio and data transfer times in a telecommunications network in packet mode including steps consisting of carrying out measurement operations using a plurality of observation probes $(2_i)$, synchronised and distributed at different points in the network (1), on data packets transmitted through the network, the measurement operations including time-dating and identification of data packets, the measurement results being transmitted by the probes to a collector module (4),
   **characterised in that** the measurement operations also comprise classification of data packets in a homogenous flow and counting of packets in the flow, the measurement results being transmitted between the probes and the collector module through the network (1), the collector module correlating identification, time-dating and classification information about the packets received from the probes, to determine packet transfer times between two observation probes, and single directional transfer times by information flow or flow group, and making comparisons of packet counts received from probes at different points in the network, to determine a packet loss ratio.

2. Method according to claim 1, **characterised in that** identification of a data packet consists of calculating an identification signature on the packet contents.

3. Method according to claim 1 or 2, **characterised in that** each observed packet is time-dated according to a common time reference acquired by the observation probes $(2_i)$.

4. Method according to claim 3, **characterised in that** a ticket is printed including the packet passage time, the packet signature and the value of a counter associated with the flow and the flow group.

5. Method according to one of claims 1 to 4, **characterised in that** it also comprises a filter step and step for semi-static sampling of classes obtained by the classification step, the sampling consisting of selecting the packets that will lead to a ticket being printed.

6. Method according to one of claims 1 to 5, **characterised in that** it comprises a dynamic sampling step with a ratio that depends on system congestion conditions.

7. Method according to claim 5 or 6, **characterised in that** sampling is done at a sampling frequency that may either be limited to a maximum value determined by the initial configuration, or be modulated by a collector module (4) or an external network operating device (1).

8. Method according to one of claims 1 to 7, **characterised in that** each packet is classified according to its destination characteristics or the type of its contents.

9. Method according to one of claims 4 to 8, **characterised in that** for a given flow F, the transfer times are determined as follows:

$$D_{es} \, (p) = Hs \, (p) - He \, (p)$$

   where:

   $D_{es}(p)$ is the transfer time between en entry point (e) and an exit point (s) of packet p;
   He(p) is the time-dating in the ticket associated with the packet (p) by the probe at the entry point;
   Hs(p) is the time-dating in the ticket associated with the packet (p) by the probe at the exit point.

10. Method according to one of claims 1 to 9, **characterised in that** the transfer times in the different portions of the network (1) are calculated by an operation to create correspondence between combinations (class, date, signature) belonging to the same packet observed by several probes $(2_i)$.

11. Method according to one of claims 1 to 10, **charac-**

**terised in that** for a given flow, the packet loss ratio is determined by calculating the number Pes (pq) of packets lost in the network between the passage of packets p and q, given by formula:

$$Pes (pq) = Ne (pq) - Ns(pq)$$

where
Ne(pq) is the number of packets between the passages of packets p and q at an exit point;
Ns(pq) is the number of packets between the passages of packets p and q at an entry point.

12. Method according to claim 7, **characterised in that**, if the sampling frequency is low, the time is divided into time slots between the time of observation of the packet for which the last ticket was printed, the size of the time slot possibly being fixed locally at the probe ($2_i$) or by the collector module (4), a counter is assigned to each time slot and the counter associated with the time slot corresponding to the passage time is incremented when each packet for which a ticket is not printed passes, and a list of counters thus obtained is attached during passage of the next packet for which a ticket is printed.

13. System with distributed architecture for non-intrusive measurement of the loss ratio and transfer times of data in a telecommunications network in packet mode, the said system comprising a plurality of flow observation probes ($2_i$) arranged at different points in the network (1) and means of transmission of these measurements to a collector module (4) comprising means (6) of analysis of the said measurements, **characterised in that** each probe ($2_i$) also comprises means of classifying data packets in a homogeneous flow, means of identifying each packet, means of counting packets in a flow, means of transmitting probes using the network to transmit the results of the measurements made, to the collector module (4), the collector module including means of correlating identification, time-dating and classification information related to packets and received from probes, and deducing packet transfer times between two observation probes, and single directional transfer times by information flow or flow group, and means of determining a packet loss ratio by comparing packet counts at different points in the network, received from the probes.

14. System according to claim 13, **characterised in that** the identification means of each probe ($2_i$) include means of calculating an identification signature for each packet.

15. System according to claim 13 or 14, **characterised**

**in that** each probe ($2_i$) also comprises compression means to compress measurement results before transmitting them to the collector module (4).

FIG1

FIG 2

FIG 3

FIG 4

| Reception des enregistrements de tickets |

| Formattage des données |

| Correlation des tickets |

| Calculs :
- délais de transfert
- comptage de trafic
- pertes de paquets |

| Aggregation des données |

| Stockage et exploitation des résultats |

FIG 5

FIG 6

EP 1 155 531 B1

FIG 7

FIG 8

# EP 1 155 531 B1

**Flux F Sonde A (entrant)**

**Flux F Sonde B (sortant)**

Corrélation ok - Perte 1-1 = 0 - Délai 1984-1356 = 628

Corrélation ok - Perte 5-5 = 0 - Délai 2040-1399 = 641

Corrélation ok - Perte 2-2 = 0 - Délai 2053-1418 = 635

## FIG 9

**Temps**

| | | | | | | | | | | |
|---|---|---|---|---|---|---|---|---|---|---|
| Paquets | a | b | c | | d | e | f | g | h | x |

Classification (on retrouve ici que tous les paquets appartiennent au même flux F)

| Signatures | 24 | 17 | | 56 | 39 | 32 | 57 | 48 | yy |
| Horodatages | 1984 | 1988 | | 2013 | 2038 | 2040 | 2051 | 2053 | zzzz |

Tickets sans échantillonnage

| 1984 24 1 | 1988 17 1 | | 2013 56 1 | 2038 39 1 | 2040 32 1 | 2051 57 1 | 2053 48 1 | xxxx yy 1 |

Tickets avec échantillonnage sur critère : signature = 0 modulo 16

| 1984 24 1 | | | 2040 32 4 | | 2053 48 2 | zzzz yy 1 |

Entregistrement de tickets correspondant :

| Sonde B | En-tête d'enregistrement | Identificateur du flux F | 1984 24 1 | 2040 32 4 | 2053 48 2 |
|---|---|---|---|---|---|

## FIG 10

18

Flux F
Sonde A
(entrant)

Flux F
Sonde B
(sortant)

1356
64
1

1399
32
5

1418
48
2

1984
64
1

2040
32
4

2053
48
2

Corrélation ok - Perte 1-1 = 0 - Délai 1984-1356 = 628

Corrélation ok - Perte 5-4 = 1 - Délai 2040-1399 = 641

Corrélation ok - Perte 2-2 = 0 - Délai 2053-1418 = 635

**FIG 11**

Temps

| | a | b | c | | d | | e | f | | g | h | | x |
|---|---|---|---|---|---|---|---|---|---|---|---|---|---|
| Paquets | | | | | | | | | | | | | |

Classification (on retrouve ici que tous les paquets appartiennent au même flux F)

| Signatures | 24 | 17 | 09 | | 56 | | 39 | | | 57 | 48 | | yy |

| Horodatages | 1984 | 1988 | 1371 | | 2013 | | 2038 | 2040 | | 2051 | 2053 | | zzzz |

Tickets sans échantillonnage

| 1984 64 1 | 1988 17 1 | 1990 09 1 | | 2013 56 1 | | 2038 39 1 | | | 2051 57 1 | 2053 48 1 | xxxx yy 1 |

Tickets avec échantillonnage sur critère : signature = 0 modulo 16

| 1984 64 1 | | | | | | | | | | 2053 48 6 | zzzz yy 1 |

Entregistrement de tickets correspondant :

| Sonde B | En-tête d'enregistrement | Identificateur du flux F | 1984 64 1 | 2053 48 6 |
|---|---|---|---|---|

**FIG 12**

**FIG 13**

**FIG 14**

Flux F
Sonde A
(entrant)

Flux F
Sonde B
(sortant)

1356
64
1

1399
32
5

1418
48
2

1984
64
1

2053
48
5

Corrélation ok - Perte 1-1 = 0 -Délai 1984-1356 = 628

Corrélation ok - Perte (2+5)-5 = 2 -Délai 2040-1399 = 641

**FIG 15**

Temps

64
1356

32
1399

Hypothèse :
1 tranche = 10 unités de temps

| 1356 64 1 | C1 = 2 | C2 = 2 | C3 = 2 | C4 = 1 | C5 = 0 8 |

**Sonde A**

64
1984

32
2040

| 1984 64 1 | C1 = 1 | C2 = 2 | C3 = 2 | C4 = 0 | C5 = 2 | C6 = 0 | 2040 32 8 |

**Sonde B**

Le 1er paquet paquet est retardé de C1 - C1 =
0 tranche de temps par rapport au paquet initial

Le 6ème paquet paquet est retardé de C5 - C3
= 2 tranches de temps par rapport au paquet
initial

**FIG 16**